# EUROPEAN PATENT APPLICATION

(11) **EP 4 664 432 A1**
(43) Date of publication of application: **17.12.2025**
(21) Application number: 23921334.1
(22) Date of filing: 08.12.2023
(51) Int. Cl.: G08G 1/00, G05D 1/221, G08G 1/04, G08G 1/09, H04N 7/18

(54) **REMOTE SUPPORT SYSTEM AND REMOTE SUPPORT METHOD**

(30) Priority: 10.02.2023 JP 2023019291
(71) Applicant: TOYOTA JIDOSHA KABUSHIKI KAISHA, Toyota-shi Aichi 471-8571 (JP)
(72) Inventor: SUDA, Rio, Toyota-shi, Aichi 471-8571 (JP); MOMOSE, Hirofumi, Toyota-shi, Aichi 471-8571 (JP); KAWAMURO, Junji, Toyota-shi, Aichi 471-8571 (JP); TAMAGAWA, Shuichi, Toyota-shi, Aichi 471-8571 (JP); AKATSUKA, Kosuke, Toyota-shi, Aichi 471-8571 (JP); SUEHIRO, Yuki, Toyota-shi, Aichi 471-8571 (JP); KOBAYASHI, Naofumi, Toyota-shi, Aichi 471-8571 (JP)
(74) Representative: J A Kemp LLP
(86) International application number: PCT/JP2023/043998
(87) International publication number: WO 2024/166514

(57) **Abstract**

A remote support system is a system for providing remote support to a target moving body. The remote support system acquires an image captured by an infrastructure camera, the image showing the target moving body. The remote support system executes a differentiation process to differentiate the target moving body in the image from other moving body, based on individual information specific to the target moving body. The remote support system then presents the image obtained as a result of the differentiation process to a remote supporter who provides the remote support for the target moving body.

## Description

### [Technical Field]

The present disclosure relates to a technology for providing remote support of moving body using infrastructure camera.

### [Background Art]

Patent Literature 1 discloses a technology for remotely controlling a vehicle.

### [List of Related Art]

### [Patent Literature]

Patent Literature 1: U.S. Patent Application Publication No. 2021/0089018

### [Summary]

### [Problem to be Solved]

Remote support (remote monitoring, remote assistance, remote driving) of a moving body by a remote supporter is considered. Typically, a camera mounted on the moving body captures the surroundings of the moving body, and the images are then displayed to the remote supporter. The remote supporter checks the presented image, recognizes the situation around the moving body, and provides remote support for the moving body.

In addition to cameras mounted on the moving body, it is also possible to use an infrastructure camera for remote support. In this case, the infrastructure camera captures the moving body and its surroundings, and an image showing moving body is presented to the remote supporter. However, there may be situations where it is difficult to identify which moving body in the image is the target of remote support. In such a situation, the effect of improving the accuracy of remote support by using the infrastructure camera cannot be fully obtained.

One objective of the present disclosure is to provide a technology that can further improve the accuracy of remote support of moving bodies using infrastructure cameras.

### [Solution to Problem]

A first aspect relates to a remote support system for providing remote support to a moving body.

The remote support system includes one or more processors.

The one or more processors acquire an image captured by an infrastructure camera, the image showing the target moving body.

The one or more processors execute a differentiation process to differentiate the target moving body in the image from another moving body, based on individual information specific to the target moving body.

The one or more processors present the image obtained as a result of the differentiation process to the remote supporter who performs the remote support of the target moving body.

A second aspect relates to a remote support method, executed by a computer, for providing remote support of a target moving body.

The remote support method comprising:
acquiring an image captured by an infrastructure camera, the image showing the target moving body;
executing a differentiation process to differentiate the target moving body in the image from another moving body, based on individual information specific to the target moving body; and
presenting the image obtained as a result of the differentiation process to the remote supporter who performs the remote support of the target moving body.

### [Effect of the Invention]

According to the present disclosure, a target moving body that is the target of remote support is shown in the image captured by the infrastructure camera. Then, a differentiation process is carried out to differentiate the target moving body in the image from another moving body. This differentiation process enables the remote supporter to more easily identify the target moving body in the image. In other words, it becomes easier for the remote supporter to provide remote support to the target moving body. As a result, the accuracy of remote support is improved. In addition, convenience for remote supporters is improved.

### [Brief Description of Drawings]

FIG. 1 is a schematic diagram showing a configuration example of a remote support system according to an embodiment;
FIG. 2 is a conceptual diagram for explaining processes related to a differentiation process in the remote support system according to the embodiment;
FIG. 3 is a flow chart showing processes related to the differentiation process in the remote support system according to the embodiment;
FIG. 4 is a block diagram showing an example of a functional configuration related to a first differentiation process based on an image process in the embodiment;
FIG. 5 is a conceptual diagram for explaining an example of an image processing according to the embodiment;
FIG. 6 is a conceptual diagram for explaining another example of the image processing according to the embodiment;
FIG. 7 is a conceptual diagram for explaining still another example of the image processing according to the embodiment;
FIG. 8 is a conceptual diagram for explaining still another example of the image process according to the embodiment;
FIG. 9 is a conceptual diagram for explaining an example of a second differentiation process based on vehicle control in the embodiment;
FIG. 10 is a block diagram showing an example of a functional configuration related to the second differentiation process based on vehicle control in the embodiment;
FIG. 11 is a block diagram showing an example of the configuration of a vehicle according to the embodiment;
FIG. 12 is a block diagram showing a configuration example of a remote support terminal according to the embodiment;
FIG. 13 is a block diagram showing an example of the configuration of a management device according to the embodiment.

### [Description of Embodiments]

Embodiments of the present disclosure will be described with reference to the drawings.

### 1. REMOTE SUPPORT SYSTEM

Remote support for a moving body is considered. Remote support is a concept that includes remote monitoring, remote assistance, and remote driving. Examples of the moving body include vehicles, robots, etc. Such a vehicle may be an autonomous driving vehicle or a vehicle driven by a driver. Examples of robots include logistics robots, etc. As an example, in the following description, a case will be considered in which the moving body that is the target of remote support is a vehicle. For generalization, "vehicle" in the following explanation should be interpreted as "moving body".

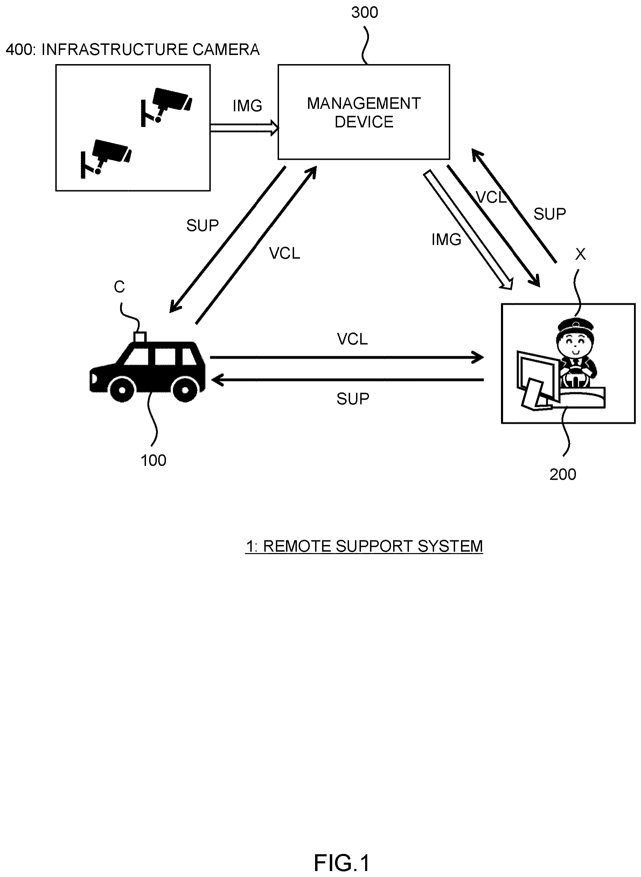

FIG. 1 is a schematic diagram showing an example of the configuration of a remote support system 1 according to the present embodiment. The remote support system 1 includes a vehicle 100, a remote support terminal 200, and a management device 300. The vehicle 100 is a target of remote support by a remote supporter X. The remote support terminal 200 is a terminal device that is operated by the remote supporter X when performing remote support of vehicle 100. The remote support terminal 200 can also be referred to as a remote cockpit. The management device 300 manages the remote support system 1. Typically, the management device 300 is a management server on a cloud. The management device 300 may be configured with multiple servers that perform distributed processing.

The vehicle 100, the remote support terminal 200, and the management device 300 can communicate with each other via a communication network. The vehicle 100 and the remote support terminal 200 can communicate with each other via the management device 300. In addition, the vehicle 100 and the remote support terminal 200 may communicate directly without routing through the management device 300.

The driver or an autonomous driving system of vehicle 100 may request remote support as necessary. For example, if the vehicle 100 encounters a difficult situation to continue autonomous driving, the autonomous driving system requests remote support. The vehicle 100 transmits a remote support request to the management device 300. The remote support request may be a request for remote assistance (RFI: Request for Information) or a request for remote driving (RFO: Request for Operation). In response to the remote support request, the management device 300 assigns a remote supporter X from among a plurality of candidates to vehicle 100 that is the target of remote support. The management device 300 manages the assignment between vehicle 100 and the remote supporter X, and also provides information on the assignment to vehicle 100 and the remote support terminal 200. Based on the assignment information, vehicle 100 and the remote support terminal 200 establish communication. After the communication is established, vehicle 100 and the remote support terminal 200 may communicate directly without via the management device 300.

The vehicle 100 is equipped with various sensors including an in-vehicle camera C. The in-vehicle camera C captures an image of the surroundings of the vehicle 100 and obtains an image showing the situation around the vehicle 100. Vehicle information VCL is information obtained by various sensors, and includes the images obtained by in-vehicle camera C. The vehicle 100 transmits vehicle information VCL to the remote support terminal 200.

The remote support terminal 200 receives the vehicle information VCL transmitted from the vehicle 100. The remote support terminal 200 presents the vehicle information VCL to the remote supporter X. Specifically, the remote support terminal 200 includes a display device and displays images etc. on the display device. The remote supporter X checks the displayed information, recognizes the situation around the vehicle 100, and provides remote support for the vehicle 100. Remote support information SUP is information about remote support by the remote supporter X. For example, the remote support information SUP includes an instruction or an operation amount input by the remote supporter X. The remote support terminal 200 transmits remote support information SUP to the vehicle 100 as necessary.

The vehicle 100 receives the remote support information SUP transmitted from the remote support terminal 200. The vehicle 100 performs vehicle travel control in accordance with the received remote support information SUP.

In this embodiment, the remote support system 1 further includes one or more infrastructure cameras 400. The infrastructure camera 400 is installed in the area in which the vehicle 100 moves. In particular, the infrastructure camera 400 is installed in a position where it can capture an image of the vehicle 100. The infrastructure camera 400 captures an image of the vehicle 100 and its surroundings, and obtains an image IMG showing the vehicle 100 and its surroundings. In other words, infrastructure camera 400 acquires the image IMG that shows vehicle 100, which is the target of remote support.

The management device 300 communicates with the infrastructure camera 400 and collects and manages the image IMG taken by infrastructure camera 400. In addition, the management device 300 provides the image IMG captured by the infrastructure camera 400 to the remote support terminal 200.

In addition to the images taken by in-vehicle camera C, the remote support terminal 200 also acquires the image IMG taken by the infrastructure camera 400 and presents these images to the remote supporter X. The image IMG captured by infrastructure camera 400 shows vehicle 100 itself, which is the target of remote support. By presenting such an image IMG to the remote supporter X, it is expected that the accuracy of remote support and convenience for the remote supporter X will be further improved.

As an application example, consider a scene in which an autonomous driving vehicle drives automatically on a factory site. For example, an autonomous driving vehicle assembled at an assembly plant drives itself from the assembly plant to a yard. One or more infrastructure cameras 400 are installed on the path from the assembly plant to the yard. By using the infrastructure camera 400, the autonomous driving vehicle can be remotely monitored. In addition, if the autonomous driving vehicle faces a difficult situation for autonomous driving, infrastructure camera 400 can be used for remote driving for the autonomous driving vehicle. Furthermore, when the autonomous driving vehicle faces a difficult situation for autonomous driving, it is possible to dispatch staff and have them take over by manual driving, but this would take considerable time and effort. Using the infrastructure camera 400 for remote driving is convenient and saves time and effort.

### 2. OVERVIEW OF DIFFERENTIATION PROCESS

For convenience, the vehicle 100 that is the target of the remote support will be hereinafter referred to as the "target vehicle 100T". The assignment between the remote supporter X and the target vehicle 100T is shared by the target vehicle 100T, the remote support terminal 200, and the management device 300.

As described above, the image IMG captured by the infrastructure camera 400 shows the target vehicle 100T. At this time, there may be a situation where it is difficult to identify which of the images IMG is the target vehicle 100T. For example, if a plurality of vehicle 100, including the target vehicle 100T, are shown in the same image IMG, it may be difficult for the remote supporter X to immediately identify which is the target vehicle 100T assigned to him/her. In such a situation, the effects of improved accuracy and convenience that would be achieved by using the infrastructure camera 400 cannot be fully obtained.

Therefore, the present disclosure proposes a technique that can further improve the accuracy of remote support using the infrastructure camera 400. For this purpose, the remote support system 1 according to the present embodiment is configured to be able to differentiate the target vehicle 100T in the image IMG captured by the infrastructure camera 400 from another vehicle. The process to differentiate the target vehicle 100T in the image IMG from another vehicle is hereinafter referred to as the "differentiation process."

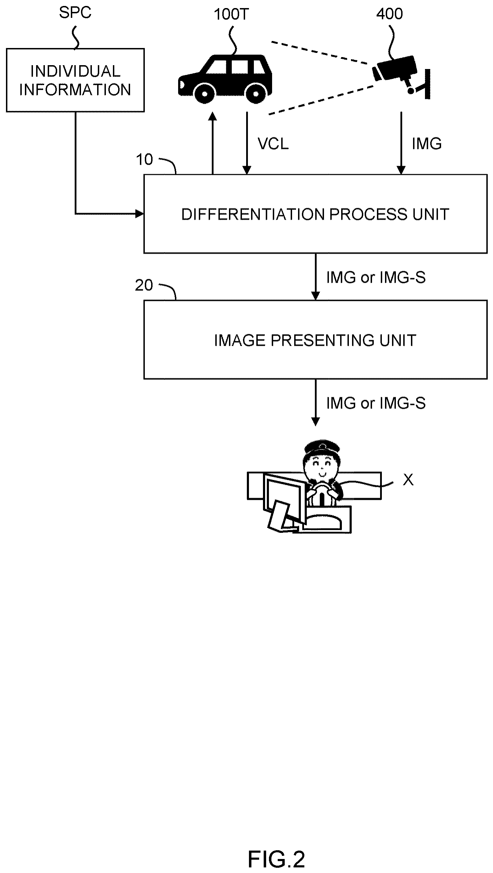

FIG. 2 is a conceptual diagram for explaining some processes related to the differentiation process in the remote support system 1. The remote support system 1 includes a differentiation process unit 10 and an image presenting unit 20.

The differentiation process unit 10 acquires the image IMG captured by the infrastructure camera 400. This image IMG shows at least the target vehicle 100T, which is the target of remote support. In addition, the differentiation process unit 10 acquires individual information SPC that is specific to the target vehicle 100T. For example, the individual information SPC includes position information indicating the actual position of the target vehicle 100T. As another example, the individual information SPC may include feature information indicating the feature of the target vehicle 100T. Examples of the feature include color, shape, lighting pattern of lighting devices, etc. The individual information SPC is typically included in the vehicle information VCL transmitted from the target vehicle 100T. Alternatively, the individual information SPC may be created separately. The differentiation process unit 10 executes the differentiation process to differentiate the target vehicle 100T in the image IMG from another vehicle based on the individual information SPC.

For example, the differentiation process unit 10 differentiates the target vehicle 100T in the image IMG from another vehicle by image processing of the image IMG. The image IMG-S is the image IMG that has been subjected to the image processing. Such a differentiation process based on the image processing (first differentiation process) will be described in detail in Section 3.

As another example, the differentiation process unit 10 may differentiate the target vehicle 100T in the image IMG from another vehicle by controlling the actual target vehicle 100T. Such a differentiation process based on vehicle control (second differentiation process) will be described in detail in Section 4.

The image presenting unit 20 receives the image IMG or the image IMG-S after image processing from the differentiation process unit 10. The image presenting unit 20 is included in the remote support terminal 200 and presents to the remote supporter X the image IMG or the processed image IMG-S. More specifically, the image presenting unit 20 displays the image IMG or the processed image IMG-S on the display device.

As long as the image IMG and the individual information SPC can be acquired, the location of the differentiation process unit 10 is not limited. As described above, the vehicle 100, the remote support terminal 200, and the management device 300 can communicate with each other via a communication network. That is, information such as the assignment information, the image IMG, the individual information SPC, and the vehicle information VCL can be shared by the vehicle 100, the remote support terminal 200, and the management device 300. Therefore, the differentiation process unit 10 may be included in any of the vehicle 100, the remote support terminal 200, and the management device 300. The differentiation process unit 10 may be distributed among two or more of the vehicle 100, the remote support terminal 200, and the management device 300.

In general, the differentiation process unit 10 and the image presenting unit 20 are realized by one or more processors and one or more storage devices. The one or more processors execute various information process. The one or more storage devices store various information required for process by the one or more processors.

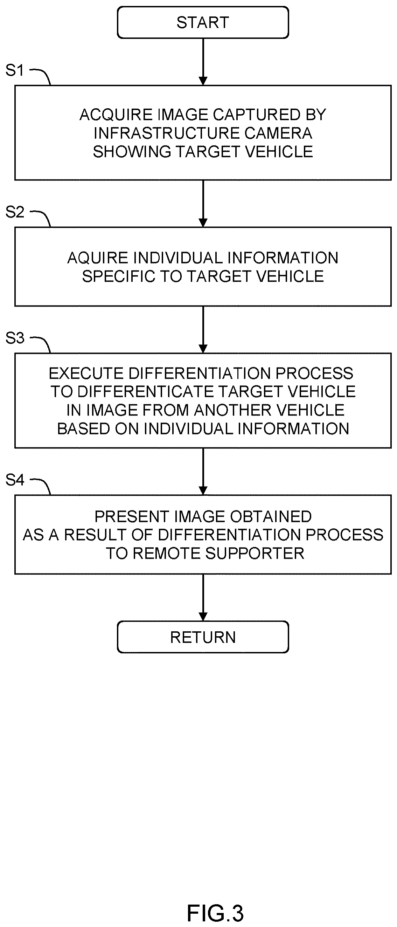

FIG. 3 is a flowchart showing the process related to the differentiation process in the remote support system 1. In step S1, one or more processors acquire the image IMG captured by the infrastructure camera 400. The image IMG shows a target vehicle 100T that is the target of remote support. In step S2, one or more processors acquire individual information SPC specific to the target vehicle 100T. In step S3, the one or more processors execute a differentiation process to differentiate the target vehicle 100T in the image IMG from aother vehicle based on the individual information SPC. In step S4, the one or more processors present to the remote supporter X the image IMG or image IMG-S obtained as a result of the differentiation process.

As described above, according to this embodiment, the image IMG captured by the infrastructure camera 400 shows the target vehicle 100T that is the target of remote support. Then, a differentiation process is executed to differentiate the target vehicle 100T in the image IMG from another vehicle. This differentiation process enables the remote supporter X to more easily identify the target vehicle 100T in the image IMG. In other words, it becomes easier for the remote supporter X to provide remote support for the target vehicle 100T. As a result, the accuracy of remote support is improved. In addition, convenience for the remote supporter X is improved.

Various examples of the differentiation process according to this embodiment will be described in detail below.

### 3. FIRST DIFFERENTIATION PROCESS BASED ON IMAGE PROCESSING

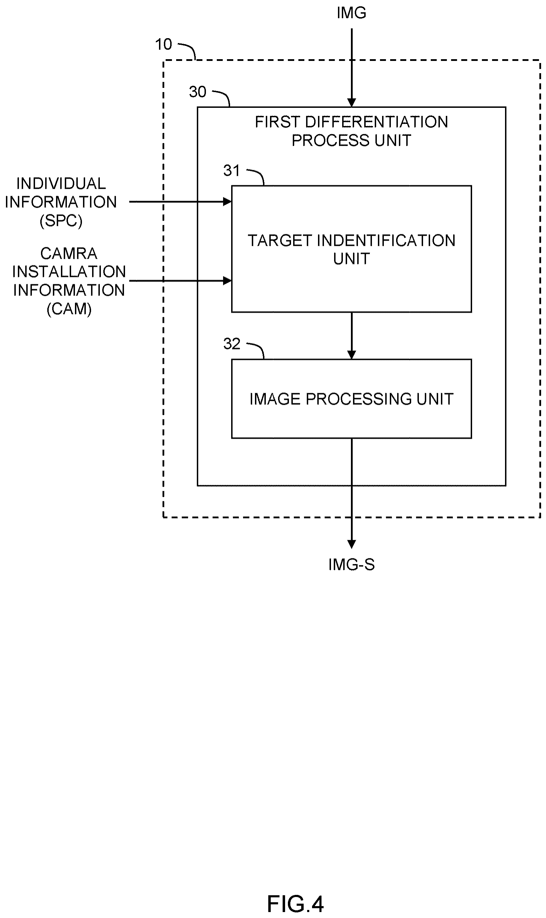

FIG. 4 is a block diagram showing an example of a functional configuration related to the first differentiation process based on image processing. The differentiation process unit 10 includes a first differentiation process unit 30. The first differentiation process unit 30 includes a target identification unit 31 and an image processing unit 32.

### 3-1. Target Identification Process

The target identification unit 31 acquires individual information SPC that is specific to the target vehicle 100T. The target identification unit 31 executes a "target identification process" to identify the target vehicle 100T in the image IMG based on the individual information SPC. There are various possible methods for the target process.

### 3-1-1. First Example of Target Identification Process

In a first example, the individual information SPC includes position information indicating the actual position of the target vehicle 100T. Typically, the actual position of the target vehicle 100T is expressed as latitude and longitude in an absolute coordinate system. The position information of the target vehicle 100T is included in the vehicle information VCL transmitted from the target vehicle 100T.

In addition, the target identification unit 31 acquires camera installation information CAM, which is installation information of the infrastructure camera 400. More specifically, the camera installation information CAM indicates an installation position, installation orientation, viewing angle, etc. of the infrastructure camera 400. Typically, the installation position of the infrastructure camera 400 is expressed by latitude and longitude in an absolute coordinate system. The camera installation information CAM is provided from the infrastructure camera 400 or the management device 300.

The target identification unit 31 identifies the target vehicle 100T in the image IMG based on the position information of the target vehicle 100T and the camera installation information CAM. More specifically, the area shot by the infrastructure camera 400, i.e., the area captured in the image IMG, can be determined from the camera installation information CAM. Based on the area and the position information of the target vehicle 100T, the display position in the image IMG corresponding to the actual position of the target vehicle 100T can be calculated. In the simplest case, the target vehicle 100T is assumed to be captured in a certain area around the calculated display position.

Alternatively, the target identification unit 31 may have an object recognition model based on machine learning. An object recognition model is trained to identify different objects in images. Typically, the objects identified by the object recognition model are moving objects. Examples of moving objects include humans (pedestrians), vehicles, motorcycles, bicycles, etc. The object recognition model may be based on a Convolutional Neural Network (CNN). As another example, the object recognition model may be based on Transformer, which is a deep learning model.

The target identification unit 31 detects the objects appearing in the image IMG by utilizing the object recognition model. The target identification unit 31 may also identify the type of object. As described above, the display position in the image IMG corresponding to the actual position of the target vehicle 100T is calculated based on the position information of the target vehicle 100T and the camera installation information CAM. The target identification unit 31 can identify, among the objects detected in the image IMG, the object located at the display position as the target vehicle 100T. Alternatively, the target identification unit 31 may perform object detection within a limited image area around the display position.

The target identification unit 31 may include a tracker. The tracker is software that automatically tracks the same object in a series of images IMG based on a tracking algorithm. By using the tracker, the target identification unit 31 can track the target vehicle 100T in a series of images IMG.

### 3-1-2. Second example of target identification process

In the second example, the individual information SPC includes feature information indicating the feature the target vehicle 100T. Examples of the feature amount include the color of the target vehicle 100T, the shape of the target vehicle 100T, the lighting pattern of the lighting devices mounted on the target vehicle 100T, etc. The lighting pattern of the lighting device may be unique to the target vehicle 100T. The feature information may be provided from the target vehicle 100T or may be provided from the management device 300 that manages each vehicle 100.

The target identification unit 31 identifies the target vehicle 100T in the image IMG based on the feature information of the target vehicle 100T. For example, the target identification unit 31 has an object recognition model based on machine learning. The object recognition model is the same as in the first example above. The object recognition model detects the objects in the image IMG, and further extracts features of each detected object. The target identification unit 31 compares the extracted feature of each detected object with the feature of the target vehicle 100T. Then, the target identification unit 31 identifies an object having an extracted feature that is the same as or similar to the feature of the target vehicle 100T as the target vehicle 100T. For example, the target identification unit 31 calculates the similarity (the inverse of the distance) between the extracted feature of each detected object and the feature of the target vehicle 100T in the feature space. Then, the target identification unit 31 identifies an object whose similarity is equal to or greater than a threshold as the target vehicle 100T.

### 3-2. Image Processing

The image processing unit 32 receives information indicating the result of the target identification process from the target identification unit 31. The information indicating the result of the target identification process includes information on the partial image area that includes the target vehicle 100T identified in the image IMG. When the above-mentioned object recognition model is used, a bounding box surrounding the identified target vehicle 100T is added to the image IMG. The partial image area including the target vehicle 100T corresponds to the area surrounded by the bounding box. The information indicating the result of the target identification process may include position information of the bounding box in the image IMG.

The image processing unit 32 processes the image IMG based on information on the partial image area in which the target vehicle 100T appears so as to differentiate the target vehicle 100T from another vehicle. In other words, the image processing unit 32 applies image process to the image IMG to differentiate the target vehicle 100T identified in the image IMG from another vehicle. In contrast to the original image IMG, the image IMG-S is an image that has been subjected to image processing by the image processing unit 32. Then, the image IMG-S after the image processing is presented to the remote supporter X.

There are several examples of the image processing to differentiate the target vehicle 100T. Such examples of the image processing will be described below.

### 3-2-1. Highlight Display

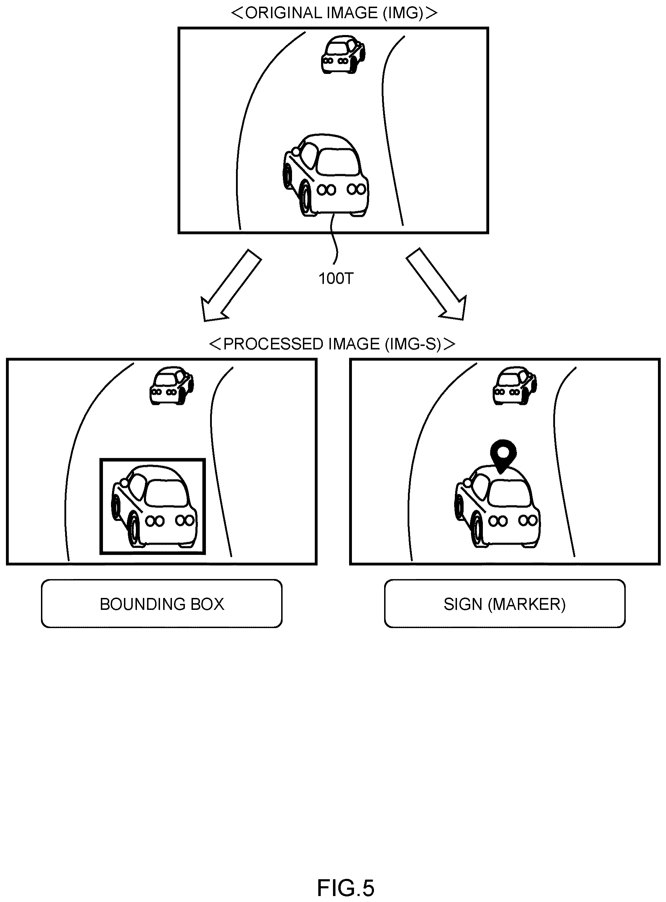

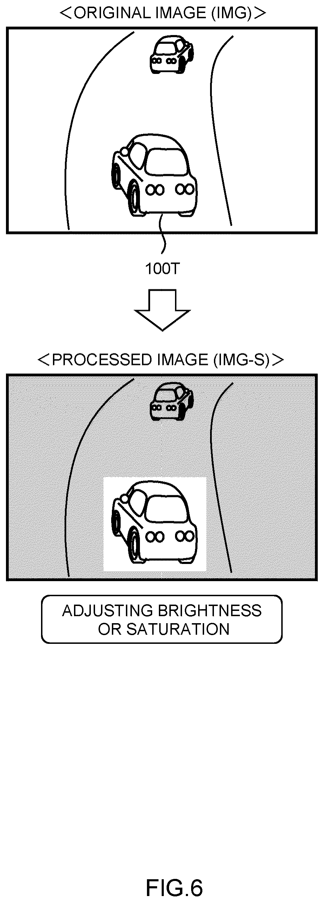

FIG. 5 and 6 are conceptual diagrams for explaining an example of the image processing. In the example shown in FIG. 5, the image processing unit 32 highlights (emphasizes) the target vehicle 100T in the image IMG. For example, the image processing unit 32 adds a bounding box surrounding the target vehicle 100T. The color of the bounding box may be specified by the remote supporter X. As another example, the image processing unit 32 may add a sign (marker) to the target vehicle 100T. The shape and color of the mark may be specified by the remote supporter X.

In the example shown in FIG. 6, the image processing unit 32 makes the brightness or saturation of the partial image region including the target vehicle 100T higher than that of the other image regions. The partial image area including the target vehicle 100T may be an area surrounded by the above-mentioned bounding box. For example, the image processing unit 32 processes to brighten the partial image region including the target vehicle 100T. Alternatively, the image processing unit 32 may process to darken other image regions that do not include the target vehicle 100T.

By highlighting (emphasizing) the target vehicle 100T in this manner, the remote supporter X can easily identify the target vehicle 100T in the image IMG-S.

### 3-2-2. Zooming in

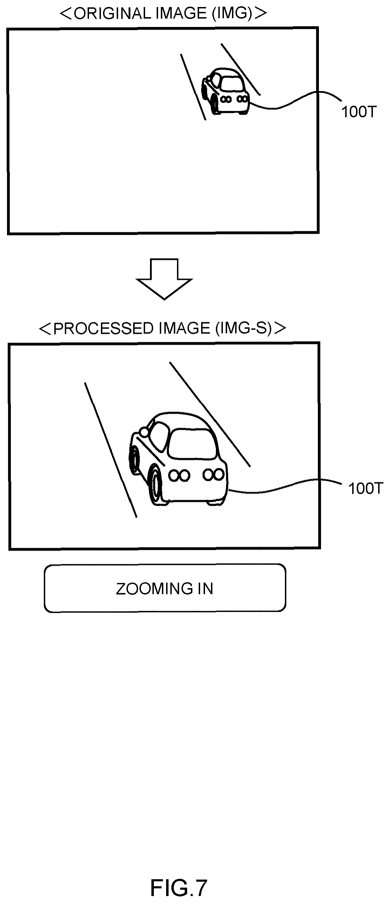

FIG. 7 is a conceptual diagram for explaining another example of the image processing. The image processing unit 32 zooms in on the target vehicle 100T in the image IMG, thereby enlarging the target vehicle 100T in the image IMG. This also emphasizes the target vehicle 100T, achieving the same effect as highlighting.

As an additional effect of zooming in, the surroundings of the target vehicle 100T are also enlarged, which allows the remote supporter X to better observe the area near the target vehicle 100T. For example, when the target vehicle 100T is being parked in a garage, it is preferable for the remote supporter X to be able to closely observe the area near the target vehicle 100T. As another example, when the target vehicle 100T enters a narrow alley, the remote supporter X can observe the area near the target vehicle 100T well.

When parking in a garage or entering a narrow alley, the speed of the target vehicle 100T is low. Furthermore, if the speed of the target vehicle 100T is low, there is no need to observe a position far away from the target vehicle 100T. Therefore, zooming in may be selected when the speed of the target vehicle 100T is low. That is, when the speed of the target vehicle 100T is less than a predetermined threshold, the image processing unit 32 may zoom in on the target vehicle 100T to enlarge the target vehicle 100T. The speed of the target vehicle 100T is obtained from the vehicle information VCL transmitted from the target vehicle 100T.

### 3-2-3. Adding Different Information

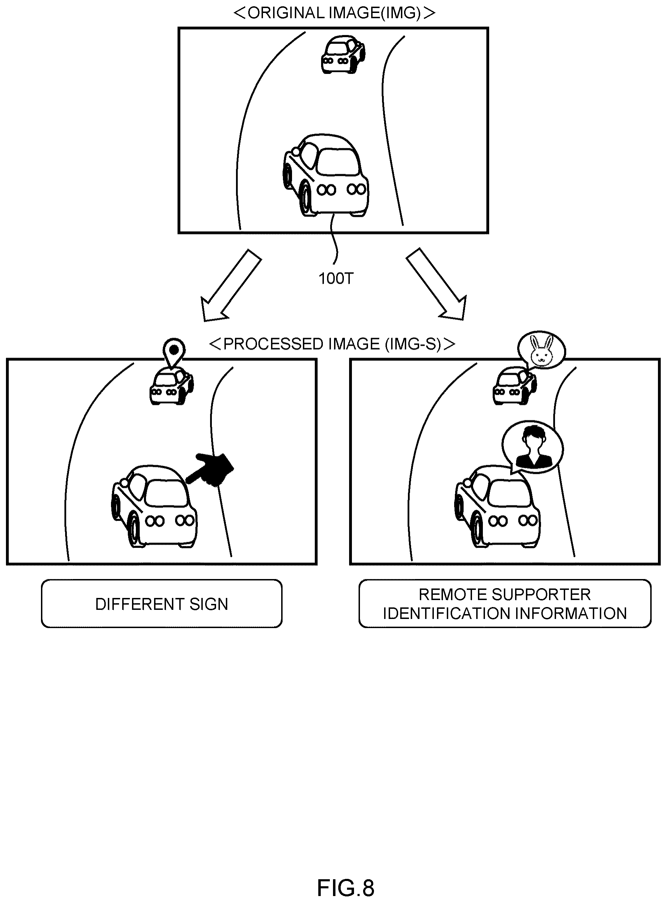

FIG. 8 is a conceptual diagram for explaining still another example of the image processing. The image processing unit 32 assigns different information to the target vehicle 100T and another vehicle in the image IMG, respectively. That is, the image processing unit 32 assigns the first information to the target vehicle 100T in the image IMG, and assigns the second information to another vehicle in the image IMG. The first information and the second information are different from each other.

For example, the image processing unit 32 assigns a first sign (first marker) to the target vehicle 100T as first information and assigns a second sign (second marker) to another vehicle as second information. The first sign and the second sign are different in at least one of color, shape, and size. The color, shape, size, etc. of the first sign may be specified by the remote supporter X.

This technique may be applied to a case where the same image IMG captured by the same infrastructure camera 400 is shared by multiple remote supporters X. A first remote supporter X-1 provides remote support for a first target vehicle 100T-1, and a second remote supporter X-2 provides remote support for a second target vehicle 100T-2. The first target vehicle 100T-1 and the second target vehicle 100T-2 are shown in the same image IMG. The image processing unit 32 provides a first sign (first marker) to the first target vehicle 100T-1, and provides a second sign (second marker) to the second target vehicle 100T-2. The first and second signs may be specified by the first remote supporter X-1 and the second remote supporter X-2, respectively.

The first information given to the first target vehicle 100T-1 may be identification information of the first remote supporter X-1. Similarly, the second information given to the second target vehicle 100T-2 may be identification information of the second remote supporter X-2. Examples of the identification information include the ID number of the remote supporter X, a facial image, an avatar, an icon, etc. The identification information may be specified by the remote supporter X.

By assigning different information to the target vehicle 100T and another vehicle in this manner, the remote supporter X can easily identify the target vehicle 100T in the image IMG-S.

### 3-2-4. Combination and Selection

Two or more of the image processing method exemplified above may be combined.

### 3-3. Effects

As described above, according to the first differentiation process, image processing is applied to the image IMG, thereby differentiating the target vehicle 100T from another vehicle. This first differentiation process enables the remote supporter X to more easily identify the target vehicle 100T in the image IMG-S. In other words, it becomes easier for the remote supporter X to provide remote support for the target vehicle 100T. As a result, the accuracy of remote support is improved. In addition, convenience for the remote supporter X is improved.

### 4. SECOND DIFFERENTIATION PROCESS BASED ON VEHICLE CONTROL

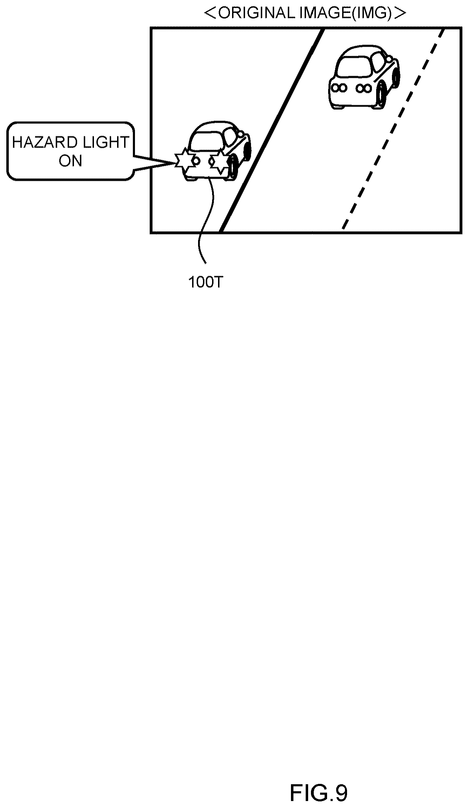

FIG. 9 is a conceptual diagram for explaining an example of a second differentiation process based on vehicle control. For example, the target vehicle 100T in the image IMG can be differentiated from another vehicle by turning on (blinking) a hazard light of the actual target vehicle 100T. This enables the remote supporter X to easily identify the target vehicle 100T in the image IMG.

However, reckless turning on the hazard light etc. on public roads may cause confusion or misunderstandings among other drivers. Therefore, turning on hazard lights etc. is permitted when the target vehicle 100T is present within predetermined areas. Examples of the predetermined areas include private property, a factory, a parking lot, a roadside, etc.

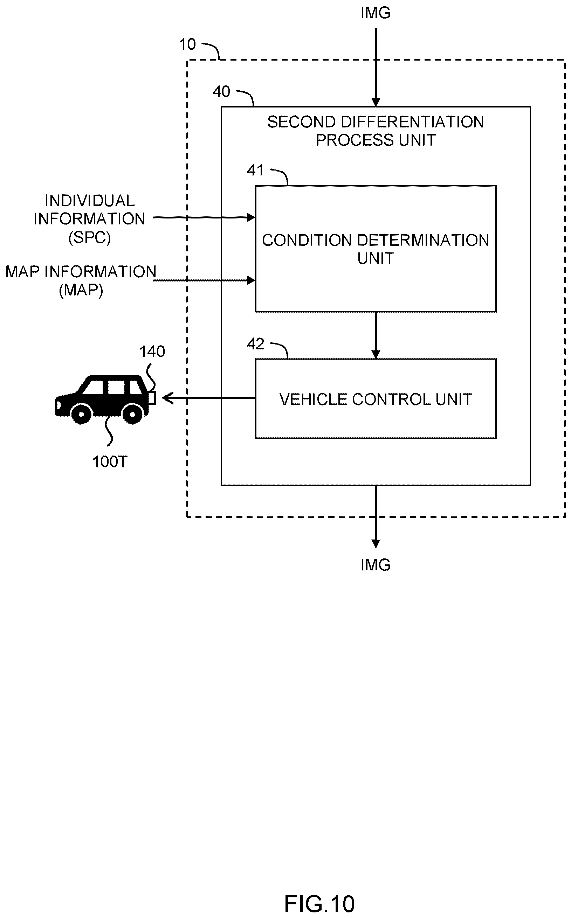

FIG. 10 is a block diagram showing an example of a functional configuration related to the second differentiation process based on vehicle control. The differentiation process unit 10 includes a second differentiation process unit 40. The second differentiation process unit 40 includes a condition determination unit 41 and a vehicle control unit 42.

The condition determination unit 41 acquires the individual information SPC that is specific to the target vehicle 100T. The individual information SPC includes the position information indicating the actual position of the target vehicle 100T. Typically, the actual position of the target vehicle 100T is expressed as latitude and longitude in an absolute coordinate system. The position information of the target vehicle 100T is included in the vehicle information VCL transmitted from the target vehicle 100T.

Moreover, the condition determination unit 41 acquires map information MAP. The locations of predetermined areas are registered in advance in the map information MAP. Examples of the predetermined area include private property, a factory, a parking lot, a roadside, etc.

The condition determination unit 41 determines whether or not the target vehicle 100T is present within a predetermined area based on the position information of the target vehicle 100T and the map information MAP. The condition determination unit 41 notifies the vehicle control unit 42 of the result of the determination.

The vehicle control unit 42 communicates with the target vehicle 100T and controls the target vehicle 100T. In particular, the vehicle control unit 42 controls the lighting device 140 mounted on the target vehicle 100T. Examples of the lighting device 140 include hazard lights, tail lights, head lights, etc. that are originally equipped with the target vehicle 100T. Alternatively, the lighting device 140 may be a special lamp that is retrofitted to the target vehicle 100T.

When the target vehicle 100T is present within the predetermined area, the vehicle control unit 42 activates the lighting device 140. This allows the target vehicle 100T in the image IMG to be differentiated from another vehicle. As a result, the remote supporter X can easily identify the target vehicle 100T in the image IMG. On the other hand, if the target vehicle 100T is outside the predetermined area, the vehicle control unit 42 prohibits the operation of the lighting device 140.

As a variation, the permission conditions for permitting operation of the lighting device 140 may further include, in addition to "the target vehicle 100T being present within a determined area", "remote driving of the target vehicle 100T is in preparation". When a remote driving request (RFO: Request for Operation) is issued from the target vehicle 100T, the management device 300 assigns a remote supporter X to the target vehicle 100T. The management device 300 provides information on the assignment to the target vehicle 100T and the remote support terminal 200. Based on the assignment information, the target vehicle 100T and the remote support terminal 200 establish communication. After the communication is established, the remote supporter X (i.e., remote operator) starts remote driving of the target vehicle 100T. The preparation period for remote driving of the target vehicle 100T is the period from the issuance of a remote driving request to the start of remote driving of the target vehicle 100T by the remote supporter X. Therefore, the period during which communication is established between the target vehicle 100T and the remote support terminal 200 is included in the preparation period for remote driving. The individual information SPC may include, in addition to the position information of the target vehicle 100T, information indicating the remote driving status of the target vehicle 100T. Based on such individual information SPC, the condition determination unit 41 determines whether or not the permission conditions for permitting the operation of the lighting device 140 are satisfied. If the permission conditions are satisfied, the vehicle control unit 42 activates the lighting device 140. On the other hand, if the permission condition is not satisfied, the vehicle control unit 42 prohibits the operation of the lighting device 140. Therefore, after communication is established, when the remote supporter X (remote operator) starts remote driving of the target vehicle 100T, the vehicle control unit 42 stops the operation of the lighting device 140.

As described above, according to the second differentiation process, the lighting device 140 mounted on the target vehicle 100T is activated, thereby differentiating the target vehicle 100T in the image IMG from another vehicle. This second differentiation process enables the remote supporter X to more easily identify the target vehicle 100T in the image IMG. In other words, it becomes easier for the remote supporter X to provide remote support for the target vehicle 100T. As a result, the accuracy of remote support is improved. In addition, convenience for the remote supporter X is improved.

Furthermore, the second differentiation process does not require complex image processing. Therefore, the processing load on the differentiation process unit 10 is reduced.

### 5. COMBINATIONS

The first differentiation process described in section 3 and the second differentiation process described in section 4 can be combined. In other words, the differentiation process unit 10 may include both the first differentiation process unit 30 and the second differentiation process unit 40.

### 6. EXAMPLES OF VEHICLE

### 6-1. Example Configuration

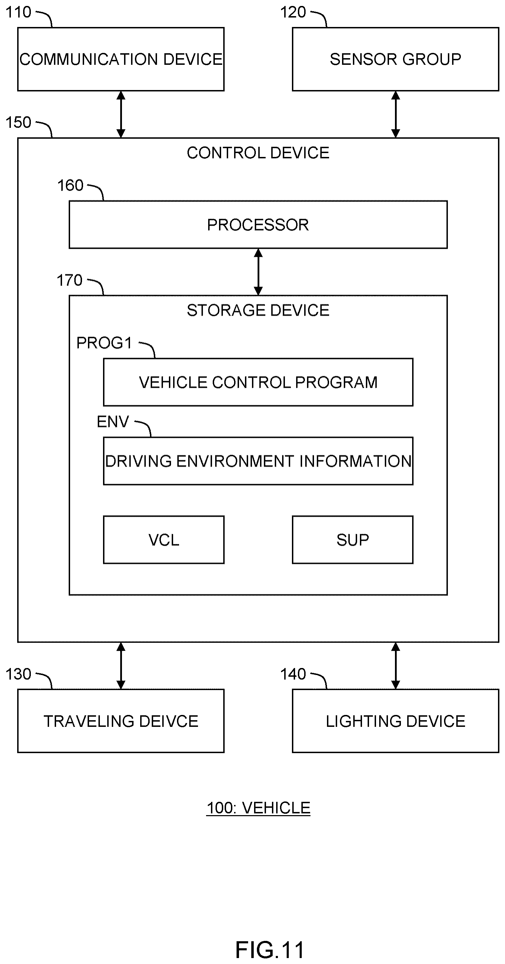

FIG.11 is a block diagram showing a configuration example of the vehicle 100. The vehicle 100 includes a communication device 110, a sensor group 120, a traveling device 130, a lighting device 140, and a control device 150.

The communication device 110 communicates with the outside of the vehicle 100. For example, the communication device 110 communicates with the remote support terminal 200 and the management device 300.

The sensor group 120 includes a recognition sensor, a vehicle state sensor, a position sensor, etc. The recognition sensor recognizes (detects) the situation around the vehicle 100. Examples of the recognition sensor include an in-vehicle camera C, a LIDAR (Laser Imaging Detection and Ranging), a radar, etc. The vehicle state sensor detects the condition of the vehicle 100. The vehicle state sensor includes speed sensor, acceleration sensor, yaw rate sensor, steering angle sensor, etc. The position sensor detects the position and orientation of the vehicle 100. For example, the position sensor includes a Global Navigation Satellite System (GNSS).

The traveling device 130 includes a steering device, a driving device, and a braking device. The steering device steers the wheel. For example, the steering device includes an electric power steering (EPS) device. The driving device is a power source that generates a driving force. Examples of driving devices include engines, electric motors, in-wheel motors, etc. The braking device generates a braking force.

The lighting device 140 includes hazard lights, taillights, headlights, etc. The lighting device 140 may include a special lamp that is retrofitted to the vehicle 100.

The control device 150 is a computer that controls the vehicle 100. The control device 150 includes one or more processors 160 (hereinafter simply referred to as processor 160) and one or more storage device 170 (hereinafter simply referred to as storage device 170). The processor 160 executes various processes. For example, the processor 160 includes a CPU (Central Processing Unit). The storage device 170 stores various information required for processing by the processor 160 . Examples of the storage device 170 include a volatile memory, a non-volatile memory, a hard disk drive (HDD), a solid-state drive (SSD), etc. The control device 150 may include one or more ECUs (Electronic Control Units).

The vehicle control program PROG1 is a computer program executed by the processor 160. The processor 160 executes the vehicle control program PROG1, thereby realizing the functions of the control device 150. The vehicle control program PROG1 is stored in the storage device 170. Alternatively, the vehicle control program PROG1 may be recorded in a computer-readable recording medium.

### 6-2. Driving Environment Information

The control device 150 uses the sensor group 120 to acquire driving environment information ENV indicating the driving environment of the vehicle 100. The driving environment information ENV is stored in the storage device 170.

The driving environment information ENV includes surrounding situation information indicating the result of recognition by the recognition sensor. For example, the surrounding situation information includes images captured by the in-vehicle camera C. The surrounding situation information may include object information regarding objects in the vicinity of the vehicle 100. Examples of objects around the vehicle 100 include pedestrians, other vehicles (preceding vehicle, parked vehicle, etc.), white line, traffic signals, sign, roadside structures, etc. The object information indicates the relative position and relative velocity of the object with respect to the vehicle 100.

The driving environment information ENV also includes vehicle state information indicating the vehicle state detected by the vehicle state sensor.

Furthermore, the driving environment information ENV includes position information indicating the position and orientation of the vehicle 100. The position information is obtained by the position sensor. Highly accurate position information may be obtained by self-location estimation process (localization) using the map information MAP and the surrounding situation information (the object information).

### 6-3. Vehicle Travel Control

The control device 150 executes vehicle travel control to control the driving of the vehicle 100. The vehicle travel control includes steering control, driving control, and braking control. The control device 150 performs vehicle driving control by controlling the traveling device 130 (the steering device, the driving device, and the braking device).

The control device 150 may perform autonomous driving control based on the driving environment information ENV. More specifically, the control device 150 generates a travel plan for the vehicle 100 based on the driving environment information ENV. Furthermore, the control device 150 generates a target trajectory required for the vehicle 100 to follow the travel plan, based on the driving environment information ENV. The target trajectory includes a target position and a target velocity. Then, the control device 150 performs vehicle travel control so that the vehicle 100 follows the target trajectory.

### 6-4. Process Related to Remote Support

A case where remote support of the vehicle 100 is performed will be described below. The control device 150 communicates with the remote support terminal 200 via the communication device 110.

The control device 150 transmits the vehicle information VCL to the remote support terminal 200. The vehicle information VCL is information necessary for remote support by the remote supporter X and includes at least a part of the driving environment information ENV described above. For example, the vehicle information VCL includes surrounding situation information (particularly images). The vehicle information VCL may include vehicle state information (speed, etc.).

The vehicle information VCL may further include individual information SPC that is specific to the vehicle 100. For example, the individual information SPC includes position information obtained by the above-mentioned position sensor. The individual information SPC may include feature information indicating the feature of the vehicle 100. Examples of the feature include color, shape, the lighting pattern of the lighting device 140, etc. The individual information SPC may include information indicating the remote driving status of the vehicle 100. The control device 150 transmits the vehicle information VCL including the individual information SPC to the differentiation process unit 10.

In addition, the control device 150 receives remote support information SUP from the remote support terminal 200. The remote support information SUP is information related to remote support by the remote supporter X. For example, the remote support information SUP includes the operation amount by the remote supporter X. The control device 150 controls the vehicle travel control in accordance with the received remote support information SUP.

### 7. EXAMPLE OF REMOTE SUPPORT TERMINAL

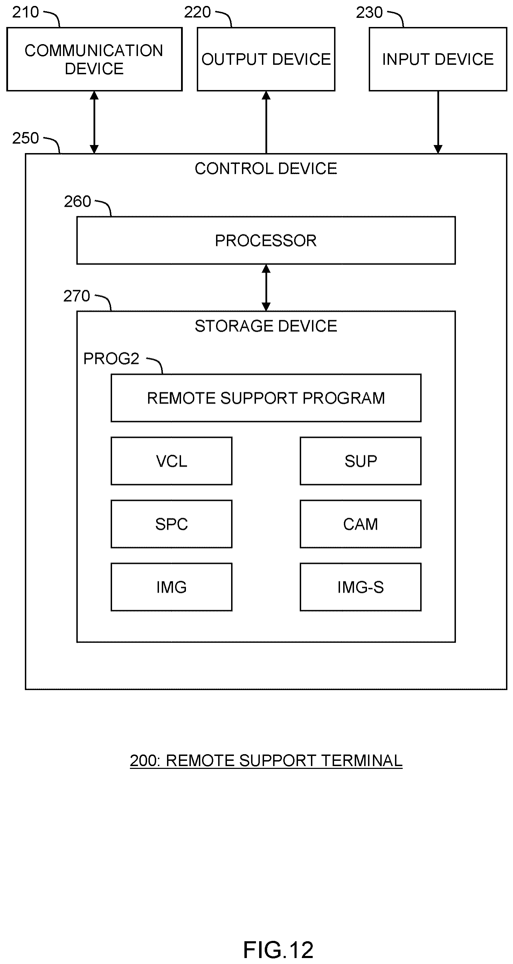

FIG. 12 is a block diagram showing a configuration example of the remote support terminal 200. The remote support terminal 200 includes a communication device 210, an output device 220, an input device 230, and a control device 250.

The communication device 210 communicates with the vehicle 100 and the management device 300.

The output device 220 outputs various types of information. For example, output device 220 includes a display device. The display device presents various types of information to the remote supporter X by displaying the various types of information. As another example, the output device 220 may include a speaker.

The input device 230 accepts input from the remote supporter X. Examples of the input device 230 include a touch panel, a button, a remote operation member, etc. The remote operation members are members that are operated by the remote supporter X (remote operator) when remote driving the vehicle 100. For example, the remote operation members include a steering wheel, an accelerator pedal, a brake pedal, a turn signal, etc. The remote operation device may be a touch panel.

The control device 250 controls the remote support terminal 200. The control device 250 includes one or more processors 260 (hereinafter simply referred to as processor 260) and one or more storage device 270 (hereinafter simply referred to as storage device 270). The processor 260 executes various processes. For example, the processor 260 includes a CPU. The storage device 270 stores various information required for processes executed by the processor 260. Examples of the storage device 270 include a volatile memory, a non-volatile memory, a HDD, an SSD, etc.

The remote support program PROG2 is a computer program executed by the processor 260. The processor 260 executes the remote support program PROG2, thereby realizing the functions of the control device 250. The remote support program PROG2 is stored in the storage device 270. Alternatively, the remote support program PROG2 may be recorded in a computer-readable recording medium. The remote support program PROG2 may be provided via a network.

The control device 250 communicates with the vehicle 100 via the communication device 210. The control device 250 receives the vehicle information VCL transmitted from the vehicle 100. The control device 250 presents the vehicle information VCL, including the image, to the remote supporter X by displaying the vehicle information VCL on the display device. The remote supporter X can recognize the state of the vehicle 100 and the surrounding circumstances based on the vehicle information VCL displayed on the display device.

The remote supporter X operates the input device 230 to provide remote support for the vehicle 100 as necessary. For example, the remote supporter X issues various instructions (e.g., a start instruction) via the input device 230. When remotely driving the vehicle 100, the remote supporter X operates the remote operation members. The operation amount of the remote operation member is detected by a sensor installed on the remote operation member. The control device 250 generates remote support information SUP including the instructions or operation amount input by the remote supporter X. Then, the control device 250 transmits the remote support information SUP to the vehicle 100 via the communication device 210.

The control device 250 may have the functions of the differentiation process unit 10. In this case, the control device 250 acquires the vehicle information VCL including the individual information SPC from the vehicle 100. In addition, the control device 250 acquires camera installation information CAM regarding the infrastructure camera 400 via the management device 300. Furthermore, the control device 250 acquires the image IMG captured by the infrastructure camera 400 via the management device 300. The acquired information and the image IMG are stored in the storage device 270. The control device 250 performs a differentiation process based on the acquired information. For example, the control device 250 performs the first differentiation process to generate the image IMG-S (see Section 3 above). As another example, the control device 250 performs the second differentiation process by sending a control instruction to the vehicle 100 via the communication device 210 (see Section 4 above).

The control device 250 has the functions of the image presenting unit 20. That is, the control device 250 presents the image IMG or the image IMG-S after the image processing to the remote supporter X via output device 220. More specifically, the control device 250 displays the image IMG or the process image IMG-S on the display device.

### 8. EXAMPLES OF MANAGEMENT DEVICE

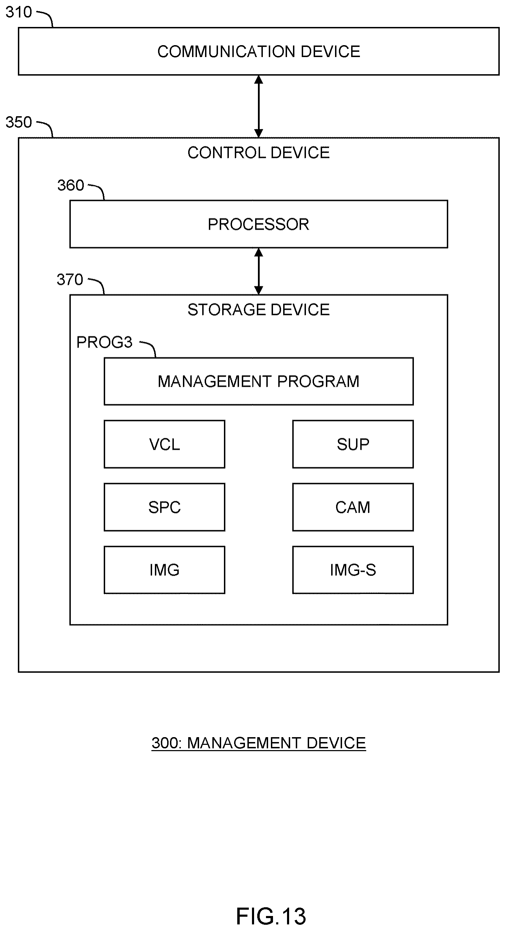

FIG. 13 is a block diagram showing an configuration example of the management device 300. The management device 300 includes a communication device 310 and a control device 350.

The communication device 310 communicates with the vehicle 100, the remote support terminal 200, and the infrastructure camera 400.

The control device 350 controls the management device 300. The control device 350 includes one or more processors 360 (hereinafter simply referred to as processor 360) and one or more storage devices 370 (hereinafter simply referred to as storage device 370). The processor 360 executes various processes. For example, the processor 360 includes a CPU. The storage device 370 stores various information required for process by the processor 360. Examples of the storage device 370 include a volatile memory, a non-volatile memory, a HDD, an SSD, etc.

The management program PROG3 is a computer program executed by the processor 360. The processor 360 executes the management program PROG3, thereby realizing the functions of the control device 350. The management program PROG3 is stored in the storage device 370. Alternatively, the management program PROG3 may be recorded in a computer-readable recording medium. The management program PROG3 may be provided via a network.

The control device 350 communicates with the vehicle 100 and the remote support terminal 200 via the communication device 310. The control device 350 receives the vehicle information VCL transmitted from the vehicle 100. Then, the control device 350 transmits the received vehicle information VCL to the remote support terminal 200. In addition, the control device 350 receives remote support information SUP transmitted from the remote support terminal 200. Then, the control device 350 transmits the received remote support information SUP to the vehicle 100.

In addition, the control device 350 communicates with the infrastructure camera 400 via the communication device 310 and acquires the image IMG captured by the infrastructure camera 400. The control device 350 provides the image IMG to the remote support terminal 200. In addition, the control device 350 may acquire the camera installation information CAM regarding the infrastructure camera 400 and provide the camera installation information CAM to the remote support terminal 200.

The control device 350 may have the functions of the differentiation process unit 10. In this case, the control device 350 acquires the vehicle information VCL including the individual information SPC from the vehicle 100. In addition, the control device 350 acquires the image IMG captured by the infrastructure camera 400 and the camera installation information CAM. The acquired information and the image IMG are stored in the storage device 370. The control device 350 performs the differentiation process based on the acquired information. For example, the control device 350 performs the first differentiation process to generate the image IMG-S (see Section 3 above). Then, the control device 350 provides the image IMG-S to the remote support terminal 200. As another example, the control device 350 performs the second differentiation process by sending a control instruction to the vehicle 100 via the communication device 310 (see Section 4 above).

### [Reference Signs List]

1: remote support system, 10: differentiation process unit, 20: image presenting unit, 30: first differentiation process unit, 31: target identification unit, 32: image processing unit, 40: second differentiation process unit, 41: condition determination unit, 42: vehicle control unit, 100: vehicle, 100T: target vehicle, 140: lighting device, 200: remote support terminal, 300: management device, 400: infrastructure camera, IMG: image, IMG-S: processed image, SPC: individual information, VCL: vehicle information

## Claims

1. A remote support system for providing remote support to a target moving body, the remote support system comprising one or more processors, wherein
the one or more processors are configured to:
acquire an image captured by an infrastructure camera, the image showing the target moving body;
execute a differentiation process to differentiate the target moving body in the image from another moving body, based on individual information specific to the target moving body; and
present the image obtained as a result of the differentiation process to a remote supporter who performs the remote support of the target moving body.

2. The remote support system according to claim 1, wherein
the differentiation process includes:
identifying the target moving body in the image based on the individual information specific to the target moving body; and
applying image processing to the image to differentiate the identified target moving body in the image from said another moving body.

3. The remote support system according to claim 2, wherein
the image processing includes highlighting the target moving body in the image.

4. The remote support system according to claim 3, wherein
the highlighting the target moving body in the image includes at least one of:
adding a bounding box surrounding the target moving body;
adding a marker to the target moving body; and
increasing brightness or saturation of an image region including the target moving body compared to other image regions.

5. The remote support system according to claim 2, wherein
the image processing includes zooming in on the target moving body in the image to enlarge the target moving body.

6. The remote support system according to claim 2, wherein
the image processing includes zooming in on the target moving body in the image to enlarge the target moving body when a speed of the target moving body is less than a threshold.

7. The remote support system according to claim 2, wherein
the image processing includes assigning first information to the target moving body in the image, and assigning second information, which is different from the first information, to said another moving body in the image.

8. The remote support system according to claim 7, wherein
the first information is a first marker, and
the second information is a second marker, which is different from the first marker.

9. The remote support system according to claim 7, wherein
the first information is identification information of the remote supporter who provides the remote support to the target moving body, and
the second information is identification information of another remote supporter who provides the remote support to said another moving body.

10. The remote support system according to any one of claims 2 to 9, wherein
the individual information specific to the target moving body includes at least one of:
position information indicating a position of the target moving body; and
feature information indicating a feature of the target moving body.

11. The remote support system according to claim 10, wherein
the individual information specific to the target moving body includes the position information indicating the position of the target moving body, and
identifying the target moving body in the image includes identifying the target moving body based on the position information and installation information of the infrastructure camera.

12. The remote support system according to claim 10, wherein
the individual information specific to the target moving body includes the feature information indicating the feature of the target moving body, and
identifying the target moving body in the image includes identifying the target moving body in the image based on the feature of the target moving body.

13. The remote support system according to claim 12, wherein
the feature of the target moving body includes at least one of:
a color of the target moving body;
a shape of the target moving body; and
a lighting pattern of a lighting device mounted on the target moving body.

14. The remote support system according to claim 1, wherein
the individual information specific to the target moving body includes position information indicating a position of the target moving body, and
the differentiation process includes:
determining whether the target moving body is present within a predetermined area based on the position information of the target moving body; and
when the target moving body is present within the predetermined area, activating a lighting device mounted on the target moving body to differentiate the target moving body in the image from said another moving body.

15. The remote support system according to claim 1, wherein
the remote support includes remote driving of the target moving body performed by the remote supporter,
the individual information specific to the target moving body includes both position information indicating a position of the target moving body and information indicating a state of the remote driving, and
the differentiation process includes:
determining whether the target moving body is present within a predetermined area based on the position information; and
when the target moving body is present within the predetermined area and the remote driving of the target moving body is in preparation, activating a lighting device on the target moving body to differentiate the target moving body in the image from said another moving body.

16. The remote support system according to claim 15, wherein
the differentiation process further includes deactivating the lighting device after the remote driving of the target moving body is initiated by the remote supporter.

17. The remote support system according to any one of claims 14 to 16, wherein
the predetermined area is any one of private property, a factory, a parking lot, or a roadside.

18. A remote support method, executed by a computer, for providing remote support to a target moving body, the remote support method comprising:
acquiring an image captured by an infrastructure camera, the image showing the target moving body assigned to a remote supporter;
executing a differentiation process to differentiate the target moving body in the image from another moving body, based on individual information specific to the target moving body; and
presenting the image obtained as a result of the differentiation process to the remote supporter who performs the remote support of the target moving body.
